# EUROPEAN PATENT SPECIFICATION

(11) **EP 3 805 944 B1**
(45) Date of publication and mention of the grant of the patent: **27.03.2024**
(21) Application number: 19811789.7
(22) Date of filing: 30.05.2019
(51) Int. Cl.: G06F 16/2455, G06F 16/22, G06F 16/21

(54) **DATA PAGE ACCESS METHOD, STORAGE ENGINE, AND COMPUTER READABLE STORAGE MEDIUM**
DATENSEITENZUGRIFFSVERFAHREN, SPEICHER-ENGINE UND COMPUTERLESBARES SPEICHERMEDIUM
PROCÉDÉ D'ACCÈS À UNE PAGE DE DONNÉES, MOTEUR DE MÉMOIRE ET SUPPORT D'INFORMATIONS LISIBLE PAR ORDINATEUR

(30) Priority: 30.05.2018 CN 201810541439
(43) Date of publication of application: 14.04.2021
(73) Proprietor: ZTE Corporation, Shenzhen, Guangdong 518057 (CN)
(72) Inventor: YAN, Zongshuai, Shenzhen, Guangdong 518057 (CN); YANG, Hongzhang, Shenzhen, Guangdong 518057 (CN); WANG, Hanyi, Shenzhen, Guangdong 518057 (CN); CHEN, Hedui, Shenzhen, Guangdong 518057 (CN); HAN, Yinjun, Shenzhen, Guangdong 518057 (CN); GUO, Bin, Shenzhen, Guangdong 518057 (CN)
(74) Representative: Baudler, Ron
(86) International application number: PCT/CN2019/089210
(87) International publication number: WO 2019/228440

(56) References cited:
- CN-A- 104 239 225
- CN-A- 105 930 500
- CN-A- 108 763 508
- US-A1- 2018 046 394
- Debrabant Justin ET AL: "A Prolegomenon on OLTP Database Systems for Non-Volatile Memory", , 1 September 2014 (2014-09-01), XP055884204, Retrieved from the Internet: URL:https://hstore.cs.brown.edu/papers/hst ore-nvm.pdf [retrieved on 2022-01-26]
- JIAN HUANG ET AL: "NVRAM-aware logging in transaction systems", PROCEEDINGS OF THE VLDB ENDOWMENT, vol. 8, no. 4, December 2014 (2014-12), pages 389-400, XP055657478, New York, NY ISSN: 2150-8097, DOI: 10.14778/2735496.2735502
- Sauer: "Modern techniques for transaction-oriented database recovery", , 21 August 2017 (2017-08-21), XP055633639, Retrieved from the Internet: URL:http://wwwlgis.informatik.uni-kl.de/cm s/fileadmin/publications/2017/PhD_Thesis_C aetano_Sauer.pdf [retrieved on 2019-10-18]
- Anonymous: "DB2 BufferPool", CSDN , 28 December 2016 (2016-12-28), pages 1-9, XP055659901, Retrieved from the Internet: URL:https://bhg.csdn.net/wepe12/article/de tails/53908028

## Description

### Field of the Invention

This application relates to, but is not limited to, the technical field of communications.

### Background of the Invention

A traditional relational database system is disk-oriented, and its main architecture is based on a two-layer storage hierarchy constructed by a hard disk drive (HDD) and a dynamic random access memory (DRAM). For this reason, input/output (I/O) between the slow HDD and the high-speed DRAM has become a major bottleneck in performance of the entire system. With the emergence of 3D XPoint technology, the industrialization of production of a new type of nonvolatile storage hardware characterized by non-volatility, large capacity, low latency, high concurrent access capability, and byte addressing and so on has become a reality. A new storage environment incorporating a nonvolatile memory (NVM) is expected to cross a performance gap between a central processing unit (CPU) and an external memory, and eliminate the I/O bottleneck restricting design of upper-level software in a computer system.

However, applying an existing relational database system directly to an NVM cannot achieve optimal performance. Specifically, there are inefficient or useless components and technologies in a database system based on the traditional storage hierarchical architecture. For example, after the disk-oriented database system is cut into a version that can be completely resident in a memory, the system does not obtain expected performance gains under an all-in memory execution environment. The reason is that except about 12% of the CPU time that is spent on useful work, a large amount of the rest of the CPU time is spent on other auxiliary work (such as buffering, concurrency control, recovery, etc.) closely related to transaction processing. At present, in some cases, an on-line transaction processing (OLTP) database architecture cannot achieve consistent optimal performance under different load characteristics (such as read-only, read-more-and write-less, write-more-and-read-less, etc.) and under an NVM environment.

Prior art "A Prolegomenon on OLTP Database Systems for Non-Volatile Memory", published on 09-2014, by Debrabant Justin, et al, discloses two possible use cases of non-volatile memory (NVM) for on-line transaction processing database systems. Prior art "NVRAM-aware logging in transaction systems", published on 12-2014, by Jian Huang, et al, shows that using NVRAM only for the logging subsystem (NV-Logging) provides much higher transactions per dollar than simply replacing all disk storage with NVRAM. Prior art "Modern techniques for transaction-oriented database recovery", published on 21-08-2017, by Caetano Sauer, discusses some alternative approaches for storage and transaction management on non-volatile memory.

### Summary of the Invention

The invention comprises a computer implemented method for a database storage engine to manage data pages, a database storage engine, and a computer readable medium as defined by the appended claims.

### Brief Description of the Drawings

Fig. 1 is a flowchart of a data page access method according to an embodiment of the present disclosure.
Fig. 2 is a schematic structural diagram of a system architecture of a database according to an embodiment of the present disclosure.
Fig. 3 is a schematic structural diagram of a mini-transaction according to an embodiment of the present disclosure.
Fig. 4 is a schematic structural diagram of a least recently used (LRU) linked list of a buffer pool according to an embodiment of the present disclosure.
Fig. 5 is a schematic structural diagram of a storage engine of an NVM-based database according to an embodiment of the present disclosure.

The realization of the objectives of the present disclosure, functional features and advantages of the objectives of the present disclosure will be further described in conjunction with the embodiments and with reference to the accompanying drawings.

### Detailed Description of the Embodiments

In order to make the technical problems to be solved by the present disclosure, the technical solutions and beneficial effects of the present disclosure clearer and more comprehensible, the present disclosure will be further described in detail below with reference to the accompanying drawings and the embodiments. It shall be appreciated that the specific embodiments described herein are intended only for explaining, rather than limiting, the present disclosure.

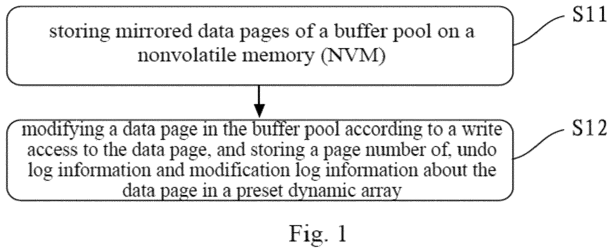

Fig. 1 is a flowchart of a data page access method according to an embodiment of the present disclosure.

As shown in Fig. 1, a data page access method according to an embodiment of the present disclosure may include steps S11 to S12.

In step S11, mirrored data pages of a buffer pool are stored on a nonvolatile memory (NVM).

In one embodiment, a storage engine of a database is reconstructed to adopt a hierarchical storage architecture, in which each layer uses a different storage medium.

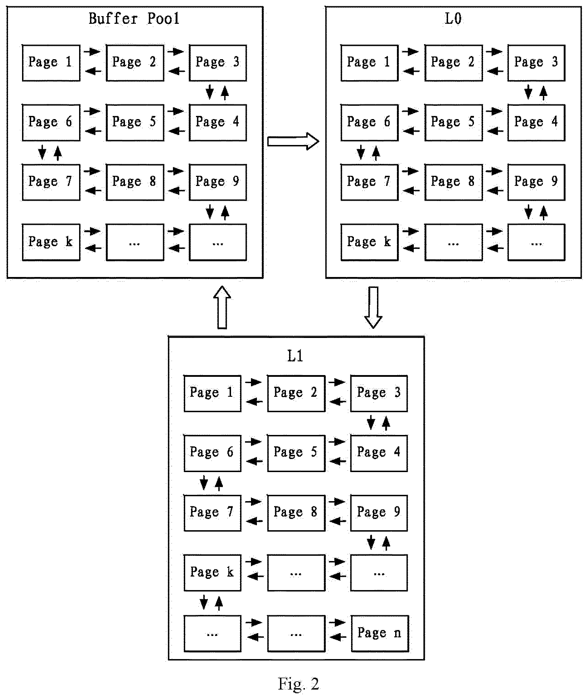

Fig. 2 is a schematic structural diagram of a system architecture of a database according to the invention.

As shown in Fig. 2, a layer L0 uses an NVM, and a layer L1 may use a hard disk drive (HDD) or a solid state drive (SSD). Both the layer L0 and the buffer pool include k data pages, namely Page 1 to Page k. The layer L1 includes n data pages, namely Page 1 to Page n, where n>k. By storing the mirrored data pages of the buffer pool on the NVM, a redo log buffer as in an existing relational database is removed and concurrency is enhanced.

When the database is started for a first time, the NVM on the layer L0 is formatted in sizes of 16Kb, so that a one-to-one correspondence is formed between the NVM on the layer L0 and the data pages in the buffer pool.

In step S12, a data page in the buffer pool is modified according to a write access to the data page, and a page number of, undo log information and modification log information about the data page are stored in a preset dynamic array.

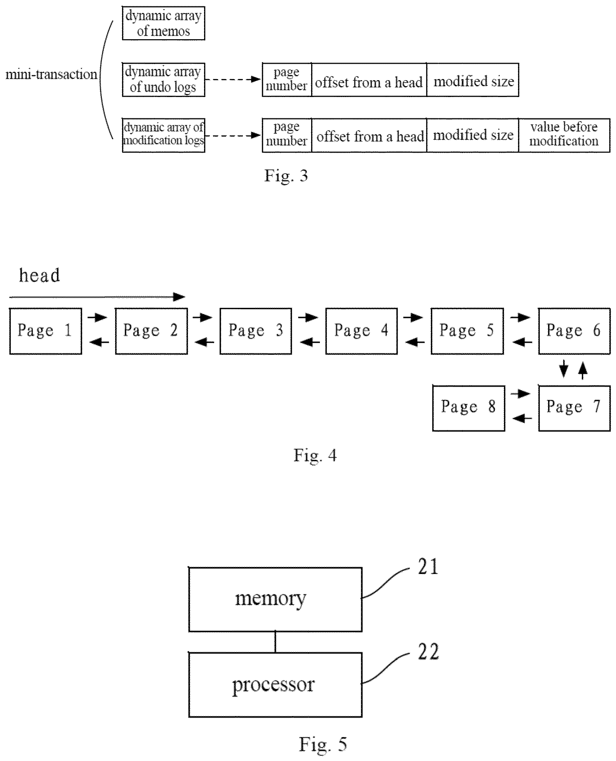

In the invention, a mini-transaction is used in a memory as a unit for operating data pages. Fig. 3 is a schematic structural diagram of a mini-transaction according to an embodiment of the present disclosure. As shown in Fig. 3, a mini-transaction includes a dynamic array of memos (Memo) for storing page numbers of data pages, a dynamic array of modification logs (Log) for storing modification log information, and a dynamic array of undo logs (Undo log) for storing undo log information.

The undo log information includes a page number, an offset from a head, a modified size, and a value before modification. The modification log information includes a page number, an offset from a head, and a modified size. Reference can be made to Fig. 3 for formats of the undo log information and the modification log information.

In the invention, step S12 of modifying the data page in the buffer pool according to the write access to the data page, and storing the page number of, the undo log information and the modification log information about the data page in the preset dynamic array includes: locating the data page according to the page number of the data page and locking the data page; storing the page number of the data page in the dynamic array of memos; recording the undo log information and storing the undo log information in the dynamic array of undo logs; and modifying the data page and storing the modification log information in the dynamic array of modification logs.

In the invention, after the transaction is started, the data page is located according to the page number and is locked; the page number of the data page is stored in the Memo; the undo log information is recorded and then stored in the Undo log for use in rolling back the transaction; and then the data page is modified and the modification log information is stored in the Log.

In the invention, after modifying the data page and storing the modification log information in the dynamic array of modification logs, the method further includes: flushing a modified part of the data page to the mirrored data pages of the buffer pool stored on the NVM according to the modification log information stored in the dynamic array of modification logs, and unlocking the data page.

In one embodiment, after the transaction is submitted, a piece of modification log information is popped up from the dynamic array of modification logs; the piece of modification log information is parsed to obtain the page number, the offset from the head, and the modified size; then the data page is located according to the page number; and the modified part of the data page is flushed to the NVM on the layer L0, for example, to the mirrored data pages of the buffer pool on the NVM, and the data page is unlocked. In the existing relational database, when a dirty page is flushed, the entire data page needs to be flushed to a disk. By way of this embodiment, however, it is only necessary to flush a modified part of the data page to the NVM on the layer L0, for example, to the mirrored data pages of the buffer pool, which reduces write amplification.

In one embodiment, after modifying the data page and storing the modification log information in the dynamic array of modification logs, the method further includes: restoring the data page according to the undo log information stored in the dynamic array of undo logs, and unlocking the data page.

In one embodiment, for rolling back the transaction, a piece of undo log information needs to be popped from the dynamic array of undo logs; the piece of undo log information is then parsed to obtain the page number, the offset from the head, the modified size, and the value before the modification; and then the data page before the modification is restored and unlocked.

In one embodiment, after the step of storing the mirrored data pages of the buffer pool on the NVM, the method further includes: judging whether the data page is in the buffer pool according to a read-only access to the data page; loading the data page from the hard disk to the buffer pool if the data page is not in the buffer pool; and performing a read-only access to the data page if the data page is in the buffer pool.

In one embodiment, when the data page to be accessed is not in the buffer pool, the data page is loaded from the hard disk on the layer L1 to the buffer pool; and when the data page to be accessed is in the buffer pool, a direct access to the data page is performed.

In one embodiment, before loading the data page from the hard disk to the buffer pool, the method further includes: selecting an unmodified data page from a least recently used (LRU) linked list of the buffer pool when a memory of the buffer pool is insufficient, and flushing the unmodified data page to the hard disk.

In one embodiment, when the memory of the buffer pool is insufficient, data on the layer L1 cannot be directly loaded into the memory. It is necessary to select an unmodified data page from an end of a cold part of the LRU linked list of the buffer pool, and flush the selected data page from the layer L0 to the layer L1, so that the selected data page in the memory is used as a free data page for loading data from the layer L1. All the data pages in the buffer pool are organized by the LRU linked list (doubly linked list), and a point at 3/8 of the LRU linked list is used as a junction between hot data and cold data. Fig. 4 is a schematic structural diagram of an LRU linked list of the buffer pool according to an embodiment of the present disclosure. As shown in Fig. 4, page 6 is used as the junction between the hot data and the cold data. Data pages (including page 6) after page 6 are all cold data pages, and data pages before page 6 are all hot data pages.

In one embodiment, after the step of storing the mirrored data pages of the buffer pool on the NVM, the method further includes: loading the mirrored data pages stored on the NVM to the buffer pool when the database is restarted.

In the existing relational database, when the database is restarted, a redo log on the disk is read for a roll-forward recovery. By using this embodiment, however, it is only necessary to load the mirrored data page on the NVM into the memory, by means of which startup time is reduced and meanwhile hot data is loaded into the memory, which further facilitates data access.

According to the data page access method of the present disclosure, by storing the mirrored data pages of the buffer pool on the NVM, the redo log buffer in the existing relational database is removed; the redo log recording process is also removed from the data page modification process; and concurrency is enhanced, which improves the performance of the storage engine of the database.

Fig. 5 is a schematic structural diagram of a storage engine of an NVM-based database according to an embodiment of the present disclosure.

As shown in Fig. 5, a storage engine of an NVM-based database according to an embodiment of the present disclosure may include: a memory 21, a processor 22, and a data page access program stored on the memory 21 and runnable on the processor 22. The data page access program, when executed by the processor 22, is configured to implement the following described steps of a data page access method: storing mirrored data pages of a buffer pool on a nonvolatile memory (NVM); and modifying a data page in the buffer pool according to a write access to the data page, and storing a page number of, undo log information and modification log information about the data page in a preset dynamic array.

In one embodiment, the data page access program, when executed by the processor 22, is further configured to implement the following steps of the data page access method: judging whether the data page is in the buffer pool according to a read-only access to the data page; loading the data page from a hard disk to the buffer pool if the data page is not in the buffer pool; and performing a read-only access to the data page if the data page is in the buffer pool.

In one embodiment, the data page access program, when executed by the processor 22, is further configured to implement the following steps of the data page access method: selecting an unmodified data page from a least recently used (LRU) linked list of the buffer pool when a memory of the buffer pool is insufficient, and flushing the unmodified data page to the hard disk.

In one embodiment, the data page access program, when executed by the processor 22, is further configured to implement the following steps of the data page access method: loading the mirrored data pages stored on the NVM into the buffer pool when the database is restarted.

In the invention, the preset dynamic array includes a dynamic array of memos for storing page numbers of data pages, a dynamic array of undo logs for storing undo log information, and a dynamic array of modification logs for storing modification log information.

In the invention, the step of modifying the data page in the buffer pool according to the write access to the data page, and storing the page number of, the undo log information and the modification log information about the data page in the preset dynamic array includes: locating the data page according to the page number of the data page and locking the data page; storing the page number of the data page in the dynamic array of memos; recording the undo log information and storing the undo log information in the dynamic array of undo logs; and modifying the data page and storing the modification log information in the dynamic array of modification logs.

In the invention, the data page access program, when executed by the processor 22, is further configured to implement the following steps of the data page access method: flushing a modified part of the data page to the mirrored data pages of the buffer pool on the NVM according to the modification log information stored in the dynamic array of modification logs, and unlocking the data page.

In one embodiment, the data page access program, when executed by the processor 22, is further configured to implement the following steps of the data page access method: restoring the data page according to the undo log information stored in the dynamic array of undo logs, and unlocking the data page.

In one embodiment, the undo log information includes a page number, an offset from a head, a modified size, and a value before modification, and the modification log information includes a page number, an offset from a head, and a modified size.

According to the storage engine of the NVM-based database of the present disclosure, by storing the mirrored data pages of the buffer pool on the NVM, the redo log buffer in the existing relational database is removed; the redo log recording process is also removed from the data page modification process; and concurrency is added, which improves performance of the storage engine of the database.

The present disclosure further provides a computer-readable storage medium which stores a data page access program. The data page access program, when executed by a processor, is configured to implement the data page access method according to the present disclosure.

It shall be noted that the computer-readable storage medium of the present disclosure belongs to a same concept as the method of the present disclosure. A specific process of implementing the computer-readable storage medium is detailed in the method embodiments, and technical features in the method embodiments are correspondingly applicable in this embodiment. Details are not repeated herein.

According to the computer-readable storage medium of the present disclosure, by storing the mirrored data pages of the buffer pool on the NVM, the redo log buffer in the existing relational database is removed; the redo log recording process is also removed from the data page modification process; and concurrency is added, which improves performance of the storage engine of the database.

Those persons of ordinary skill in the art will appreciate that all or some of the steps of the methods disclosed above, and the functional modules/units of the systems and devices disclosed above, may be implemented as software, firmware, hardware, and any suitable combinations thereof. In hardware implementations, the division between functional modules/units referred to in the above description does not necessarily correspond to the division between physical components. For example, one physical component may have multiple functions, or one function or step may be executed by a combination of a plurality of physical components. Some or all of the components may be implemented as software executed by a processor, such as a central processing unit, a digital signal processor or a microprocessor, or be implemented as hardware, or as an integrated circuit, such as an application-specific integrated circuit. Such software may be distributed on a computer-readable medium which may include computer storage medium (or non-transitory medium) and communication medium (or transitory medium). As known to those of ordinary skill in the art, the term computer storage medium includes volatile and nonvolatile, removable and non-removable medium implemented in any method or technology for storage of information (such as computer-readable instructions, data structures, program modules, or other data). Computer storage medium includes, but is not limited to, random access memory (RAM), read only memory (ROM), electrically erasable programmable read-only memory (EEPROM), flash memory or other memory technologies, compact disc read-only memory (CD-ROM), digital versatile disk (DVD) or other optical disk storages, magnetic cassettes, magnetic tapes, magnetic disk storages or other magnetic storages, or any other medium that can be used to store desired information and can be accessed by a computer. In addition, it is known to those of ordinary skill in the art that, communication medium typically contains computer-readable instructions, data structures, program modules or other data in a modulated data signal such as a carrier wave or other transport mechanism, and may include any information delivery medium.

## Claims

1. A computer implemented method for data page access in a nonvolatile memory-based database, comprising:
storing (S11) mirrored data pages of a buffer pool on a nonvolatile memory; and
modifying (S12) a data page in the buffer pool according to a write access to the data page, and storing a page number of, undo log information and modification log information about the data page in a preset dynamic array,
wherein the preset dynamic array comprises a dynamic array of memos for storing page numbers of data pages, a dynamic array of undo logs for storing undo log information, and a dynamic array of modification logs for storing modification log information, and
wherein modifying the data page in the buffer pool according to the write access to the data page, and storing the page number of, the undo log information and the modification log information about the data page in the preset dynamic array comprises:
locating the data page according to the page number of the data page and locking the data page;
storing the page number of the data page in the dynamic array of memos;
recording the undo log information and storing the undo log information in the dynamic array of undo logs; and
modifying the data page and storing the modification log information in the dynamic array of modification logs;
flushing a modified part of the data page to the mirrored data pages of the buffer pool stored on the NVM according to the modification log information stored in the dynamic array of modification logs, and unlocking the data page.

2. The method according to claim 1, wherein, after storing the mirrored data pages of the buffer pool on the nonvolatile memory, the method further comprises:
judging whether the data page is in the buffer pool according to a read-only access to the data page;
loading the data page from a hard disk to the buffer pool if the data page is not in the buffer pool; and
performing a read-only access to the data page if the data page is in the buffer pool.

3. The method according to claim 2, wherein, before loading the data page from the hard disk to the buffer pool, the method further comprises:
selecting an unmodified data page from a least recently used linked list of the buffer pool when a memory of the buffer pool is insufficient; flushing the unmodified data page to the hard disk; and taking the unmodified data page in the buffer pool as a free data page for loading the data page from the hard disk.

4. The method according to claim 1, wherein, after storing the mirrored data pages of the buffer pool on the nonvolatile memory, the method further comprises:
loading the mirrored data pages stored on the nonvolatile memory into the buffer pool when a database is restarted.

5. The method according to claim 1, wherein, after modifying the data page and storing the modification log information in the dynamic array of modification logs, the method further comprises:
restoring the data page according to the undo log information stored in the dynamic array of undo logs, and unlocking the data page.

6. The method according to claim 1, wherein the undo log information includes a page number, an offset from a head, a modified size, and a value before modification; and
the modification log information includes a page number, an offset from a head, and a modified size.

7. A storage engine of a nonvolatile memory-based database, comprising: a memory (21), a processor (22), and an improving data page access performance program stored on the memory (21) and runnable on the processor (22), wherein the improving data page access performance program, when executed by the processor (22), implements the method for improving data page access performance according to any of claims 1 to 6.

8. A computer-readable storage medium on which an improving data page access performance program is stored, wherein the improving data page access performance program, when executed by a processor, implements the method for improving data page access performance according to any of claims 1 to 6.

## Patentansprüche

1. Computerimplementiertes Verfahren für Datenseitenzugriff in einer nichtflüchtigen speicherbasierten Datenbank, umfassend:
Speichern (S11) von gespiegelten Datenseiten eines Pufferpools auf einem nichtflüchtigen Speicher; und
Modifizieren (S12) einer Datenseite im Pufferpool gemäß einem Schreibzugriff auf die Datenseite und Speichern einer Seitennummer von Rückgängigmachungsprotokollinformationen und Modifikationsprotokollinformationen über die Datenseite in einer voreingestellten dynamischen Matrix,
wobei die voreingestellte dynamische Matrix eine dynamische Matrix von Protokollen zum Speichern von Seitennummern von Datenseiten, eine dynamische Matrix von Rückgängigmachungsprotokollen zum Speichern von Rückgängigmachungsprotokollinformationen und eine dynamische Matrix von Modifikationsprotokollen zum Speichern von Modifikationsprotokollinformationen umfasst, und
wobei das Modifizieren der Datenseite im Pufferpool gemäß dem Schreibzugriff auf die Datenseite und das Speichern der Seitennummer der Rückgängigmachungsprotokollinformationen und der Modifikationsprotokollinformationen über die Datenseite in der voreingestellten dynamischen Matrix umfasst:
Lokalisieren der Datenseite gemäß der Seitennummer der Datenseite und Sperren der Datenseite;
Speichern der Seitennummer der Datenseite in der dynamischen Matrix von Protokollen;
Aufzeichnen der Rückgängigmachungsprotokollinformationen und Speichern der Rückgängigmachungsprotokollinformationen in der dynamischen Matrix von Rückgängigmachungsprotokollen; und
Modifizieren der Datenseite und Speichern der Modifikationsprotokollinformationen in der dynamischen Matrix von Modifikationsprotokollen;
Schieben eines modifizierten Teils der Datenseite zu den gespiegelten Datenseiten des Pufferpools, die auf dem NVM gespeichert sind, gemäß den Modifikationsprotokollinformationen, die in der dynamischen Matrix von Modifikationsprotokollen gespeichert sind, und Entsperren der Datenseite.

2. Verfahren nach Anspruch 1, wobei das Verfahren nach dem Speichern der gespiegelten Datenseiten des Pufferpools auf dem nichtflüchtigen Speicher ferner umfasst:
Beurteilen, ob sich die Datenseite im Pufferpool befindet, gemäß einem Nur-Lese-Zugriff auf die Datenseite;
Laden der Datenseite von einer Festplatte in den Pufferpool, wenn sich die Datenseite nicht im Pufferpool befindet; und
Durchführen eines Nur-Lese-Zugriffs auf die Datenseite, wenn sich die Datenseite im Pufferpool befindet.

3. Verfahren nach Anspruch 2, wobei das Verfahren vor dem Laden der Datenseite von der Festplatte in den Pufferpool ferner umfasst:
Auswählen einer unmodifizierten Datenseite aus einer zuletzt verwendeten verknüpften Liste des Pufferpools, wenn ein Speicher des Pufferpools unzureichend ist; Verschieben der unmodifizierten Datenseite auf die Festplatte; und Nehmen der unmodifizierten Datenseite im Pufferpool als eine freie Datenseite zum Laden der Datenseite von der Festplatte.

4. Verfahren nach Anspruch 1, wobei das Verfahren nach dem Speichern der gespiegelten Datenseiten des Pufferpools auf dem nichtflüchtigen Speicher ferner umfasst:
Laden der auf dem nichtflüchtigen Speicher gespeicherten gespiegelten Datenseiten in den Pufferpool, wenn eine Datenbank neu gestartet wird.

5. Verfahren nach Anspruch 1, wobei das Verfahren nach dem Modifizieren der Datenseite und Speichern der Modifikationsprotokollinformationen in der dynamischen Matrix von Modifikationsprotokollen ferner umfasst:
Wiederherstellen der Datenseite gemäß den Rückgängigmachungsprotokollinformationen, die in der dynamischen Matrix von Rückgängigmachungsprotokollen gespeichert sind, und Entsperren der Datenseite.

6. Verfahren nach Anspruch 1, wobei die Rückgängigmachungsprotokollinformationen eine Seitennummer, einen Versatz von einem Kopf, eine modifizierte Größe und einen Wert vor der Modifikation umfassen; und
die Modifikationsprotokollinformationen eine Seitennummer, einen Versatz von einem Kopf und eine modifizierte Größe umfassen.

7. Speichermaschine einer nichtflüchtigen speicherbasierten Datenbank, umfassend: einen Speicher (21), einen Prozessor (22) und ein Verbesserungsdatenseitenzugriffsleistungsprogramm, das auf dem Speicher (21) gespeichert und auf dem Prozessor (22) ausführbar ist, wobei das Verbesserungsdatenseitenzugriffsleistungsprogramm, wenn es durch den Prozessor (22) ausgeführt wird, das Verfahren zum Verbessern der Datenseitenzugriffsleistung nach einem der Ansprüche 1 bis 6 implementiert.

8. Computerlesbares Speichermedium, auf dem ein Verbesserungsdatenseitenzugriffsleistungsprogramm gespeichert ist, wobei das Verbesserungsdatenseitenzugriffsleistungsprogramm, wenn es durch einen Prozessor ausgeführt wird, das Verfahren zum Verbessern der Datenseitenzugriffsleistung nach einem der Ansprüche 1 bis 6 implementiert.

## Revendications

1. Procédé mis en oeuvre par ordinateur pour un accès à une page de données dans une base de données à base de mémoire non volatile, comprenant:
stocker (S11) des pages de données en miroir d'un groupe de tampons sur une mémoire non volatile; et
modifier (S12) une page de données dans le groupe de tampons en fonction d'un accès en écriture à la page de données, et stocker un numéro de page d'informations de journal d'annulation et d'informations de journal de modification concernant la page de données dans un réseau dynamique prédéfini,
dans lequel le réseau dynamique prédéfini comprend un réseau dynamique de mémoires pour stocker des numéros de page de pages de données, un réseau dynamique de journaux d'annulation pour stocker des informations de journal d'annulation, et un réseau dynamique de journaux de modification pour stocker des informations de journal de modification, et
dans lequel modifier la page de données dans le groupe de tampons en fonction de l'accès en écriture à la page de données, et stocker le numéro de page des informations de journal d'annulation et des informations de journal de modification concernant la page de données dans le réseau dynamique prédéfini comprend:
localiser la page de données en fonction du numéro de page de la page de données et verrouiller la page de données;
stocker le numéro de page de la page de données dans le réseau dynamique de mémoires;
enregistrer les informations de journal d'annulation et stocker les informations de journal d'annulation dans le réseau dynamique de journaux d'annulation; et
modifier la page de données et stocker les informations de journal de modification dans le réseau dynamique de journaux de modification;
transférer une partie modifiée de la page de données aux pages de données en miroir du groupe de tampons stockées sur la NVM en fonction des informations de journal de modification stockées dans le réseau dynamique de journaux de modification, et déverrouiller la page de données.

2. Procédé selon la revendication 1, dans lequel, après avoir stocké les pages de données en miroir du groupe de tampons sur la mémoire non volatile, le procédé comprend en outre:
juger si la page de données est dans le groupe de tampons en fonction d'un accès en lecture seule à la page de données;
charger la page de données d'un disque dur dans le groupe de tampons si la page de données n'est pas dans le groupe de tampons; et
réaliser un accès en lecture seule à la page de données si la page de données est dans le groupe de tampons.

3. Procédé selon la revendication 2, dans lequel, avant de charger la page de données du disque dur dans le groupe de tampons, le procédé comprend en outre:
sélectionner une page de données non modifiée à partir d'une liste liée utilisée le moins récemment du groupe de tampons lorsqu'une mémoire du groupe de tampons est insuffisante; vider la page de données non modifiée sur le disque dur; et prendre la page de données non modifiée dans le groupe de tampons comme une page de données libre pour charger la page de données à partir du disque dur.

4. Procédé selon la revendication 1, dans lequel, après avoir stocké les pages de données en miroir du groupe de tampons sur la mémoire non volatile, le procédé comprend en outre:
charger les pages de données en miroir stockées sur la mémoire non volatile dans le groupe de tampons lorsqu'une base de données est redémarrée.

5. Procédé selon la revendication 1, dans lequel, après avoir modifié la page de données et stocké les informations de journal de modification dans le réseau dynamique de journaux de modification, le procédé comprend en outre:
restaurer la page de données en fonction des informations de journal d'annulation stockées dans le réseau dynamique de journaux d'annulation, et déverrouiller la page de données.

6. Procédé selon la revendication 1, dans lequel les informations de journal d'annulation comprennent un numéro de page, un décalage par rapport à une tête, une taille modifiée et une valeur avant modification; et
les informations de journal de modification comprennent un numéro de page, un décalage par rapport à une tête et une taille modifiée.

7. Machine de stockage d'une base de données à base de mémoire non volatile, comprenant: une mémoire (21), un processeur (22) et un programme d'amélioration de performance d'accès à une page de données stocké sur la mémoire (21) et exécutable sur le processeur (22), dans lequel le programme d'amélioration de performance d'accès à une page de données, lorsqu'il est exécuté par le processeur (22), met en oeuvre le procédé pour améliorer la performance d'accès à une page de données selon l'une quelconque des revendications 1 à 6.

8. Support de stockage lisible par ordinateur sur lequel un programme d'amélioration de performance d'accès à une page de données est stocké, dans lequel le programme d'amélioration de performance d'accès à une page de données, lorsqu'il est exécuté par un processeur, met en oeuvre le procédé pour améliorer la performance d'accès à une page de données selon l'une quelconque des revendications 1 à 6.
